# EUROPÄISCHE PATENTSCHRIFT

(11) **EP 1 677 942 B1**
(45) Veröffentlichungstag und Bekanntmachung des Hinweises auf die Patenterteilung: **16.12.2009**
(21) Anmeldenummer: 04790990.8
(22) Anmeldetag: 28.10.2004
(51) Int. Cl.: B23K 20/10, H01R 43/02

(54) **VERFAHREN ZUM VERSCHWEISSEN VON LEITERN**
METHOD FOR WELDING CONDUCTORS
PROCEDE POUR SOUDER DES CONDUCTEURS

(30) Priorität: 29.10.2003 DE 10350809; 18.12.2003 DE 10359368
(43) Veröffentlichungstag der Anmeldung: 12.07.2006
(73) Patentinhaber: Schunk Sonosystems GmbH, 35435 Wettenberg (DE)
(72) Erfinder: EBERBACH, Jost, 35418 Buseck (DE)
(74) Vertreter: Stoffregen, Hans-Herbert
(86) Internationale Anmeldenummer: PCT/EP2004/012221
(87) Internationale Veröffentlichungsnummer: WO 2005/042202

(56) Entgegenhaltungen:
- EP-A- 0 208 310
- FR-A- 2 302 172
- US-A- 5 941 443

## Beschreibung

Die Erfindung bezieht sich auf ein Verfahren zum Verschweißen von elektrischen Leitern wie Litzen mittels Ultraschall, insbesondere Litzen untereinander zur Herstellung von Durchgangs- und Endknoten oder Litzen mit einem Träger, wobei die Leiter in einen von zumindest zwei Begrenzungselementen begrenzten Verdichtungsraum eingebracht und nach Schließen des Verdichtungsraums verschweißt werden, wobei über ein erstes Element wie eine Sonotrode Ultraschall appliziert und über das erste Element oder ein zweites Element wie eine Gegenelektrode die zu verschweißenden Leiter druckbeaufschlagt werden und wobei eine charakteristische Größe des Verdichtungsraums gemessen wird. Auch nimmt die Erfindung Bezug auf ein Verfahren zur Qualitätsüberprükng von verschweißten Leitern, insbesondere verschweißten Litzen wie Durchgangs- oder Endknoten oder auf einem Träger verschweißten Litzen.

Beim Ultraschallschweißen eines Knoten werden mehrere Litzen wie Kupferleitungen, die ihrerseits aus mehreren Adern bestehen, in einen Verdichtungsraum eingebracht, zusammengepresst und sodann durch Ultraschall in Relativschwingung zueinander versetzt. Die Reibung der Adern untereinander führt zum Verschweißen der Oberflächen, so dass nach dem Schweißen ein fester Knoten vorliegt. Während des Verdichtens und Verschweißens wird das Volumen des Verdichtungsraums verringert. Diese Volumenänderung kann durch Weggeber gemessen und als Vergleichswert zur Qualitätsüberwachung benutzt werden. Die Festigkeit des Knotens ist das entscheidende Qualitätskriterium für den Prozess des Ultraschallschweißens.

Um die Festigkeit entsprechender Knoten zu bestimmen, kann der Knoten durch Ziehen oder Schälen zerstörend oder nicht zerstörend durch eine Art Härteprüfung (Splice-Checker) gemessen werden.

Der EP-B-0 208 310 ist ein gattungsgemäßes Verfahren zum Regeln des Prozessverlaufs zur Qualitätskontrolle beim Ultraschallschweißen von Werkstücken zu entnehmen. Hierzu wird zur Aktivierung der Ultraschallenergie eine Sonotrode einer Ultraschallschweißvorrichtung auf ein auf einem Amboss aufliegendes Werkstück abgesenkt, wobei beim Aufsetzen der Sonotrode auf das Werkstück ein Null-Abgleich erfolgt, um anschließen die Sonotrode zu aktivieren und einen gewünschten Verformungsweg durchfahren zu lassen.

Aus der SU-A-757 337 ist ein Verfahren zum Ultraschallschweißen von thermoplastischen Stoffen bekannt, bei dem über einen unmittelbar an der Sonotrode angebrachten Wegaufnehmer die Einsenktiefe der Sonotrode und damit die Verformung der Werkstücke beim Schweißvorgang erfasst wird. Bei Vorzeichenänderung der zweiten zeitlichen Ableitung des Wegsignals wird der Schweißvorgang beendet.

In der DE-A-2 149 748 werden ein Verfahren, eine Vorrichtung sowie ein System zur Herstellung von Verbindungen zu integrierten Schaltungen beschrieben. Um verbesserte Verbindungen zu erzielen, wird die Krafteinleitung auf ein Werkzeug, aber auch dessen Energiebeaufschlagung durch die über einen Wegaufnehmer ermittelte Deformation der zu verbindenden Teile gesteuert.

Eine Regelung des Schweißvorgangs mittels Ultraschall ist aus der FR-A-2 302 172 bekannt, bei dem die Geschwindigkeit der Absinkbewegung einer Sonotrode beim Schweißvorgang erfasst, mit vorgegebenen Grenzwerten verglichen und bei Überschreiten einstellbarer Schwellen die Energiezufuhr zur Sonotrode begrenzt wird.

In der WO-A-95/10866 wird ein Verfahren und eine Vorrichtung zum Verschweißen von Leitern beschrieben, mit der bzw. dem querschnittsunabhängig ein definiertes Schweißen erfolgen kann, auch dann, wenn in willkürlicher Reihenfolge Leiter unterschiedlicher Querschnitte nacheinander verschweißt werden. Hierzu wird nach dem Verdichten der zu verschweißenden Leiter eine charakteristische Größe des Verdichtungsraums gemessen.

Um einen zu verschweißende Leiter aufnehmenden Verdichtungsraum in Höhe und Breite im gewünschten Umfang zu verstellen und auf den jeweiligen Schweißquerschnitt automatisch einstellen zu können, sind Vorrichtungen bekannt, wie diese der EP-B-0 143 936 oder der DE-C-37 19 083 zu entnehmen sind.

Der vorliegenden Erfindung liegt das Problem zu Grunde, ein Verfahren der eingangs genannten Art so weiterzubilden, dass unmittelbar nach Herstellen des Knotens überprüft werden kann, ob die Schweißung gewünschten Qualitätsanforderungen genügt. Auch bezieht sich die Erfindung auf ein Verfahren zur Qualitätsüberprüfung von verschweißten Leitern.

Erfindungsgemäß wird das Problem im Wesentlichen dadurch gelöst, dass nach dem Verschweißen der Leiter der Verdichtungsraum druckentlastet und Ultraschall auf die verschweißten Leiter gegeben und anschließend die charakteristische Größe gemessen wird.

Erfindungsgemäß erfolgt die Prüfung der Güte der Verschweißung direkt im Verdichtungsraum, ohne dass es zusätzlicher Einrichtungen bedarf. Hierzu ist erfindungsgemäß vorgesehen, dass der Verdichtungsraum nach dem Schweißen druckentlastet wird, um sodann insbesondere einen kurzen Schallimpuls auf die Verschweißung wie den Knoten zu geben. Ist die Verschweißung nicht fest, so werden die durch den Schall in Schwingung versetzten Leiter oder Litzen in Richtung druckentlasteter Begrenzung des Verdichtungsraums wandern. Somit kann die Begrenzung ausweichen, so dass aufgrund der weiterhin erfolgten Druckbeaufschlagung über das zweite Element wie Gegenelektrode oder Amboss eine relativ große Wegänderung des zweiten Elementes erfolgt. Dieses Maß der Wegänderung, das über einen Weggeber erfassbar ist, gibt somit Aufschluss darüber, ob die Schweißung Qualitätsanforderungen genügt oder nicht; denn erfolgt nur eine geringe Wegänderung, ist der Schluss zu ziehen, dass die Verschweißung die erforderliche Festigkeit aufweist.

Druckentlastung bedeutet allgemein, dass z. B. ein Begrenzungs- wie Seitenelement des Verdichtungsraums entriegelt bzw. entlastet wird, so dass das Seitenelement aufgrund des dem Druck des zweiten Elementes ausweichenden "weich" werdenden Knotens verschoben wird, sofern dieser nicht die erforderliche Festigkeit aufweist. Durch das Ausweichen des Begrenzungselementes zerfließt der weiche Knoten quasi, so dass das zweite Element entsprechend in Richtung des ersten Elementes verstellt wird. Somit erfolgt bei nicht hinreichend festem Knoten eine charakteristische Wegänderung des zweiten Elementes. Das Ausweichen des Begrenzungselementes, also dessen Wegänderung kann auch als charakteristische Größe genutzt werden, um Rückschlüsse über die Güte des Knotens zu ziehen.

Durch Wahl geeigneter Parameter während des Prüfens wie zum Beispiel Presskraft, Amplitude oder Dauer des Schalls kann anhand des Betrages der Wegänderung unterschieden werden, ob die Verschweißung bzw. der Knoten fest ist oder nicht, also gewünschten Qualitätsanforderungen genügt oder nicht.

Die Druckentlastung des Verdichtungsraums erfolgt insbesondere dadurch, dass der Verdichtungsraum von zumindest drei Elementen begrenzt wird und nach dem Verschweißen zumindest ein Element zu den verschweißten Leitern im erforderlichen Umfang entriegelt bzw. entlastet wird. Auch ein Verstellen des Elementes zum Öffnen des Verdichtungsraums erfüllt das Merkmal der Druckentlastung.

Als charakteristische Größe, die Rückschlüsse auf die Güte der Verschweißung ermöglicht, ist insbesondere ein Geometriewert wie Höhe, Breite oder Diagonale des Verdichtungsraums zu wählen, wobei der Geometriewert z. B. durch einen Weggeber erfasst wird.

Bei der Messung der Diagonalen wird dabei der Verdichtungsraum scheinbar umfangsseitig geschlossen. Insbesondere wird jedoch als charakteristische Größe der Abstand zwischen dem den Ultraschall abgebenden ersten Element (Sonotrode) und dem den Druck übertragenden zweiten Element (Amboss bzw. Gegenelektrode) gewählt.

Mit anderen Worten bezieht sich die Erfindung grundsätzlich auf ein Verfahren zum Verschweißen von elektrischen Leitern mittels Ultraschall, wobei die Leiter in einen von zumindest zwei Begrenzungselementen begrenzten Verdichtungsraum eingebracht und nach Schließen des Verdichtungsraums verschweißt werden, wobei über eine Sonotrode Ultraschall bzw. Ultraschallschwingungen appliziert und über eine Gegenelektrode die zu verschweißenden Leiter druckbeaufschlagt werden. Um mit einfachen Maßnahmen die Güte der Schweißstelle überprüfen zu können, wird vorgeschlagen, dass nach dem Verschweißen der Leiter der Verdichtungsraum druckentlastet wird und sodann ein Ultraschallimpuls bzw. Ultraschallschwingungsimpuls auf die verschweißen Leiter bei gleichzeitiger Druckbeaufschlagung auf diese appliziert und anschließend Abstandsveränderung von Sonotrode und Gegenelektrode gemessen wird. Während der Druckbeaufschlagung der Leiter kann durch die Druckentlastung des Verdichtungsraums wie Freigeben eines der Begrenzungselemente dieses den verschweißten Leitern ausweichen, sofern die Leiter eine in Richtung des Begrenzungselementes erfolgende Verformung erfahren.

In Weiterbildung der Erfindung zeichnet sich ein Verfahren zur Qualitätsüberprüfung der in dem Verdichtungsraum der Ultraschallschweißvorrichtung verschweißten Leiter dadurch aus, dass die Leiter in dem Verdichtungsraum bei gleichzeitiger Querschnittsverringerung des Verdichtungsraums kompaktiert und verschweißt werden, dass nach der Druckentlastung des Verdichtungsraums, wobei die verschweißten Leiter zwischen dem ersten Element und dem zweiten Element verbleiben, und dem erneuten Applizieren von Ultraschall gleichzeitig eine Druckbeaufschlagung auf die verschweißten Leiter über das erste und/oder das zweite Element erfolgt und dass anschließend die charakteristische Größe des Verdichtungsraums und/oder Geometrie der verschweißten Leiter gemessen wird.

Dabei wird in Abhängigkeit von der gemessenen charakteristischen Größe des Verdichtungsraums und/oder der Geometrie der verschweißten Leiter die Güte der Verschweißung bewertet.

Insbesondere kann als charakteristische Größe des Verdichtungsraums Höhe und/oder Breite und/oder Diagonale des Verdichtungsraums zum Beispiel mittels eines Weggebers gemessen werden.

Das erneute Applizieren des Ultraschall sollte über eine Zeitdauer T mit 10 ms ≤ T ≤ 250 ms erfolgen. Dabei soll das erneute Beaufschlagen mit Ultraschall unmittelbar an den Schweißprozess anschließen, diesen quasi fortsetzen.

Um sicherzustellen, dass qualitätsmindere Verschweißungen in einen normalen Fertigungsprozess nicht einfließen können, sieht eine hervorzuhebende Weiterbildung der Erfindung vor, dass bei Feststellen qualitätsminderer Verschweißung auf die verschweißten Leiter bei weiterhin druckentlastetem geöffneten Verdichtungsraum erneut Ultraschall bei gleichzeitiger Druckbeaufschlagung zum Zerstören oder weitgehender Zerstörung der Schweißung appliziert wird.

Wird eine ordnungsgemäße Schweißung festgestellt, so kann eine gezielte Nachverdichtung bei geöffnetem Verdichtungsraum zur Erhöhung der Festigkeit der Schweißung erfolgen.

Das erfindungsgemäße Verfahren zur Qualitätskontrolle kann jedoch unabhängig von der Vorrichtung durchgeführt werden, in der Leiter verschweißt werden, gleichwenn bevorzugterweise in ein und derselben Vorrichtung das Verschweißen und das Überprüfen der verschweißten Leiter wie insbesondere von zu Durchgangs- oder Endknoten verschweißten Litzen erfolgt.

So können die verschweißten Leiter zwischen einem Ultraschallschwingungen applizierenden ersten Element wie Sonotrode und einem zweiten Element wie Gegenelektrode angeordnet werden, sodann Ultraschall bzw. Ultraschallschwingungen appliziert werden und während oder nach dem Applizieren erfolgte Abstandsänderung zwischen dem ersten und dem zweiten Element bei gleichzeitiger Druckbeaufschlagung der verschweißten Leiter gemessen werden. Sodann erfolgt in zuvor beschriebener Weise aufgrund der Abstandsveränderung zwischen dem ersten und dem zweiten Element eine Bewertung, ob die verschweißten Leiter den Güteanforderungen entsprechen; denn sollte eine Abstandsänderung zwischen dem ersten und dem zweiten Element in unzulässiger Größe erfolgen, ist der Schluss zu ziehen, dass die Schweißverbindung nicht den gestellten Anforderungen genügt.

Bezüglich der zuvor erläuterten Qualitätsüberprüfung gelangen die Parameter bzw. Messverfahren zur Überprüfung der Güte der verschweißten Leiter zur Anwendung, die zuvor angesprochen worden sind.

Weitere Einzelheiten, Vorteile und Merkmale der Erfindung ergeben sich nicht nur aus den Ansprüchen, den diesen zu entnehmenden Merkmalen für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißanordnung,
- Fig. 2: einen Verdichtungsraum einer Ultraschallschweißvorrichtung in einer ersten Position,
- Fig. 3: der Verdichtungsraum gemäß Fig. 2 in einer zweiten Position und
- Fig. 4: eine weitere Ausführungsform eines Verdichtungsraums.

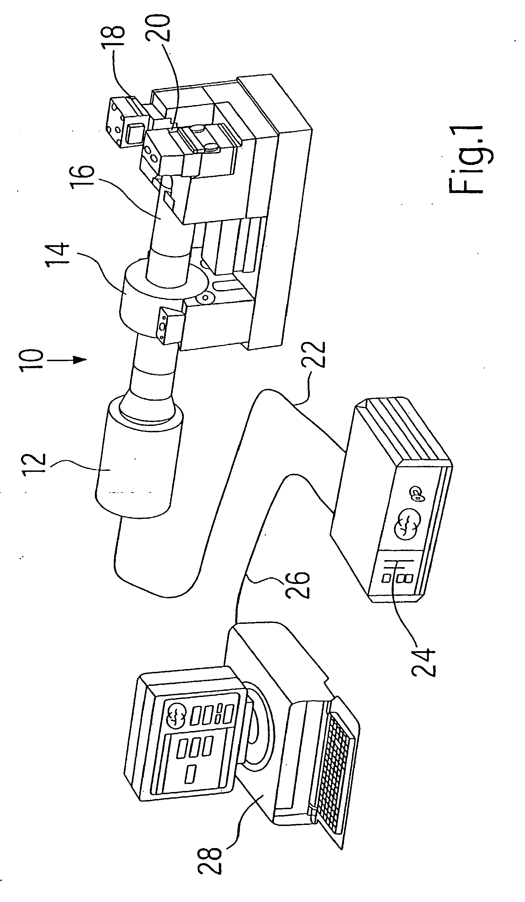

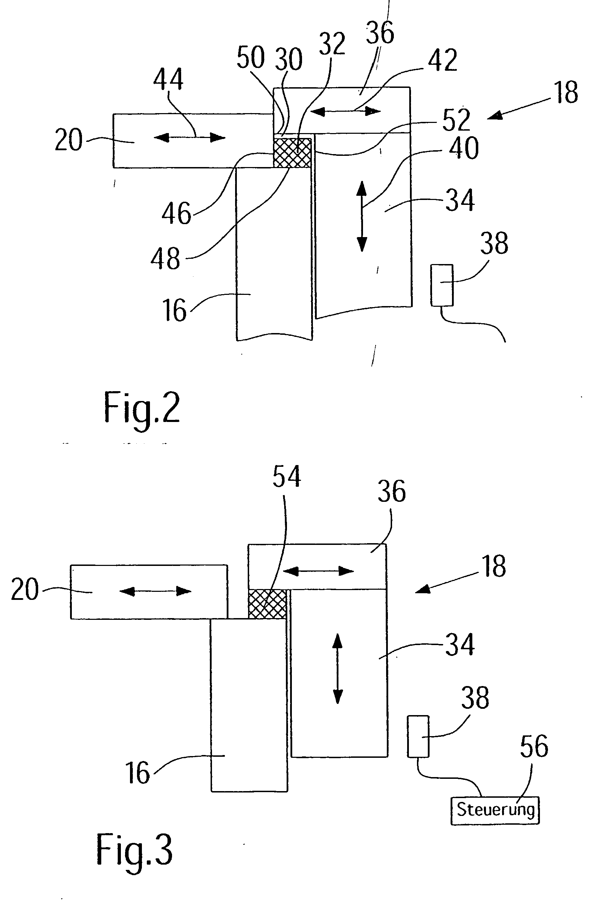

In Fig. 1 ist rein prinzipiell eine Anordnung dargestellt, mit der insbesondere elektrische Leiter mittels Ultraschall zu End- oder Durchgangsknoten verschweißt werden. Die Anordnung umfasst eine Ultraschallschweißvorrichtung oder -maschine 10, die in gewohnter Weise einen Konverter 12, gegebenenfalls einen Booster 14 sowie eine Sonotrode 16 umfasst. Der Sonotrode 16 bzw. einer Fläche dieser ist eine mehrteilige Gegenelektrode 18 -auch Amboss genannt- sowie ein Schieber 20 zugeordnet, wie dies der DE-C-37 19 083 zu entnehmen ist, auf deren Offenbarung ausdrücklich verwiesen wird. Die Sonotrode 16 bzw. deren Fläche, die Gegenelektrode 18 sowie der Schieber 20 begrenzen einen im Querschnitt verstellbaren Verdichtungsraum, der anhand der Fig. 2 - 4 näher erläutert wird. In dem Verdichtungsraum werden die zu verschweißenden Elemente wie Leiter eingebracht.

Der Konverter 12 ist über eine Leitung 22 mit einem Generator 24 verbunden, der seinerseits über eine Leitung 26 zu einem PC 28 führt, über den eine Steuerung des Schweißprozesses erfolgt und in den Schweißparameter bzw. Querschnitt zu verschweißender Leiter eingegeben bzw. entsprechende abgespeicherte Wert abgerufen werden können.

Wie sich aus der Fig. 2 ergibt, weist die Ultraschallschweißvorrichtung 10 einen aus Sonotrode 16, Gegenelektrode 18 sowie Seitenschieber 20 begrenzten Verdichtungsraum 30 auf, in den im Ausführungsbeispiel zu verschweißende Leiter 32 eingebracht werden. Die Gegenelektrode 18 besteht aus einer vertikal verstellbaren Säule oder Platte 34, von der ein horizontal verschiebbarer Querschieber 36 ausgeht. Der vertikal beweglichen Platte 34 ist des Weiteren ein Weggeber 38 zugeordnet. Die Bewegung der vertikalen Platte 34, des Querschiebers 36 sowie des Seitenschiebers 20 ist durch die Doppelpfeile 40, 42, 44 symbolisiert.

Sind die Leiter 32 in den Verdichtungsraum 30 eingebracht, so wird zunächst der Seitenschieber 20 in Richtung der Leiter 32 bewegt. Entsprechend wird der Querschieber 36 positioniert, damit dieser bei vertikaler Bewegung der Platte 34 entlang dem Schieber 20, d.h. entlang seiner den Verdichtungsraum 30 begrenzenden Fläche 46 verstellt werden kann. Untere Begrenzungsfläche des Verdichtungsraums 30 wird durch eine Fläche 48 der Sonotrode 16 gebildet. Gegenüberliegende Begrenzungsfläche ist eine Fläche 50 des Querschiebers 36. Verbleibende parallel zur Begrenzungsfläche 46 verlaufende Begrenzungsfläche 52 des Verdichtungsraums 30 wird von der vertikalen Platte 34 gebildet.

Bei geschlossenem Verdichtungsraum 30 erfolgen zunächst ein Kompaktieren der Leiter 32 und sodann ein Verschweißen dieser, in dem die Sonotrode 16 in Ultraschallschwingung versetzt wird. Gleichzeitig wird die Gegenelektrode 18 - auch Amboss genannt - in Richtung des Pfeils 40 in Richtung der Begrenzungsfläche 48 der Sonotrode 16 verstellt (Pfeil 40), wodurch eine erforderliche Kraft- bzw. Druckbeaufschlagung auf die Leiter 32 erfolgt.

Nach Beendigung des Schweißvorganges, also nach Herstellung eines Knoten 54 wird nach der Darstellung der Fig. 3 der Seitenschieber 20 druckentlastet. Dies kann durch Entriegeln bzw. Entlasten des Seitenschiebers 20 erfolgen, so dass dieser in Richtung des Pfeils 49 durch über den verschweißten Knoten 54 übertragene Kräfte verschoben werden kann. Eine Druckentlastung kann auch dadurch erfolgen, dass der Verdichtungsraum 30 durch Verstellen des Seitenschiebers 20 geöffnet wird. Sodann wird bei weiterer Druckbeaufschlagung auf den Knoten 54 über die Gegenelektrode 18 bzw. den Querschieber 36 Ultraschall bzw. ein -schallimpuls mit geeigneter Amplitude und Dauer über die Sonotrode 16 auf den Knoten 54 übertragen. Hierdurch können die Leiter bzw. Litzen des Knotens 54 in Richtung des Schiebers 20 ausweichen, und zwar in einem Umfang, der davon abhängig ist, inwieweit der Knoten 54 die erforderliche Festigkeit aufweist. Da über den Querschieber 36 eine Kraftbeaufschlagung auf den Knoten 54 gegeben ist, erfolgt dann, wenn die Leiter oder Litzen dieser Bewegung ausweichen, eine Vertikalbewegung der Gegenelektrode 18, die von dem Weggeber 38 gemessen und an eine Steuerung 56 weitergegeben wird. Aus der über den Weggeber 38 ermittelten Wegänderung kann über die Steuerung 56 festgestellt werden, ob der Knoten 54 die erforderliche Festigkeit und damit Qualität aufweist oder nicht; denn bei hinreichender Festigkeit des Knotens 54 erfolgt nur eine minimale von dem Weggeber 38 gemessene Bewegung der Gegenelektrode 18.

So ergibt sich zum Beispiel bei einem Knoten mit einem Querschnitt von 1,5 mm² eine Wegänderung von etwa 0,05 mm, sofern der Knoten die erforderliche Festigkeit aufweist. Ist diese nicht gegeben, so ergeben sich zum Beispiel bei einem Prüfdruck von 2 bar und einer Schalldauer von 40 ms eine Wegänderung von 0,2 mm, die signalisiert, dass der Knoten die für eine Weiterverarbeitung erforderliche Festigkeit nicht besitzt.

Bei Knoten mit einem Querschnitt von zum Beispiel 10,5 mm² ergibt sich eine Wegänderung von in etwa 0,03 mm, wenn die erforderliche Festigkeit vorliegt. Für nicht feste Knoten ergibt sich zum Beispiel eine Wegänderung von in etwa 0,1 mm bei Prüfdruck von 3 bar und einer Schallimpulsdauer von 55 ms.

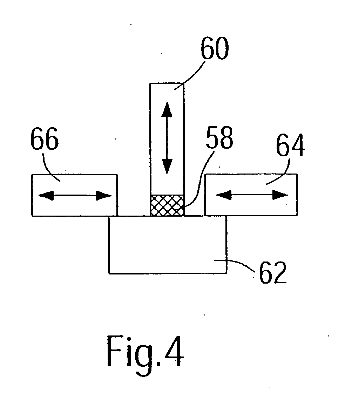

Entsprechend der Prinzipdarstellung der Fig. 4 lässt sich eine Qualitäts- bzw. Festigkeitsüberprüfung auch dann durchführen, wenn ein Verdichtungsraum nicht nur einseitig, sondern mehrseitig druckentlastet wird. Ausschlaggebend ist allein, dass ein hergestellter Knoten 58 zwischen einer eine Druckbeaufschlagung ermöglichenden Gegenelektrode 62 und einer Ultraschällschwingung applizierenden Sonotrode 60 angeordnet ist, wie dies prinzipiell der Fig. 4 zu entnehmen ist. Dabei werden verbleibende Begrenzungsflächen des beim Schweißen den Knoten 58 umgebenden Verdichtungsraums von Seitenschiebern 64, 66 gebildet, die bei der Qualitätsüberprüfung, also bei der weiteren Ultraschallbeaufschlagung und Druckbeaufschlagung druckentlastet bzw. seitlich weggefahren sind. Auch kann entsprechend der Darstellung gemäß Fig. 4 das Element 62 ein mit den Litzen zu verschließender Träger sein, der seinerseits auf der Elektrode bzw. dem Amboss abgestützt ist, die bzw. der bei dieser Variante nicht dargestellt ist.

Die erfindungsgemäße Lehre kann des Weiteren dahingehend erweitert werden, dass dann, wenn sich bei der Qualitätsprüfung herausstellen sollte, dass ein Knoten die erforderliche Festigkeit nicht aufweist, eine weitere Schalleinwirkung bei gleichzeitiger Druckbeaufschlagung erfolgt, wodurch der Knoten 54 quasi auseinander fließt und somit zerstört wird, so dass eine Berücksichtigung in einem Fertigungsprozess nicht mehr möglich ist.

Auch besteht die Möglichkeit, hinreichend feste Knoten gezielt nachzuverdichten. Dies kann bei geöffnetem Verdichtungsraum zur Erhöhung der Knotenfestigkeit erfolgen, wenn also des Weiteren Ultraschallimpulse bei gleichzeitiger Druckbeaufschlagung eingeleitet werden.

Ist die Erfindung anhand des Verschweißens von Litzen erläutert worden, so soll hierdurch eine Beschränkung der erfindungsgemäßen Lehre nicht erfolgen. Eine Überprüfung der Festigkeit von auf einem Träger aufgeschweißten Litzen ist zum Beispiel gleichfalls möglich. Dabei bildet der Träger vorzugsweise eine Begrenzung des Verdichtungsraums. Daher ist der Träger auf der Gegenelektrode abgestützt. Die Druckbeaufschlagung erfolgt sodann auch über die Sonotrode. Alternativ können die Litzen auf die Sonotrode und sodann der Träger auf dieser angeordnet werden. Die Druckbeaufschlagung erfolgt über die Gegenelektrode oder Amboss, die bzw. der sich auf den Träger abstützt.

Ist anhand der zuvor erfolgten Beschreibung eine Überprüfung der verschweißten Leiter wie Durchgangs- oder Endknoten in derselben Ultraschallschweißvorrichtung vorgenommen worden, in der das Verschweißen der Leiter bzw. Litzen selbst erfolgt, so wird die Erfindung auch dann nicht verlassen, wenn eine Qualitätsüberprüfung in einer gesonderten Maschine durchgeführt wird, die als Hauptbestandteile eine Ultraschallschwingungen übertragende Sonotrode und eine der Sonotrode zugeordnete Gegenelektrode bzw. einen Amboss aufweist. Auf ihre Festigkeit zu überprüfende verschweißte Leiter wie Durchgangs- oder Endknoten oder auf einem Träger verschweißte Litzen werden sodann zwischen Sonotrode und Amboss angeordnet, um in zuvor beschriebener Art auf die verschweißten Leiter einen Ultraschallimpuls bei gleichzeitiger Druckbeaufschlagung einzuleiten. Gleichzeitig wird die Abstandsänderung zwischen Sonotrode um Amboss gemessen, um aus dem Verstellweg Rückschlüsse bezüglich der Festigkeit der Schweißstelle zu ziehen.

Eine diesbezügliche Qualitätskontrolle zeigt den Vorteil, dass in verschiedenen Schweißvorrichtungen verschweißte Leiter z. B. an einem zentralen Ort überprüft werden können, ohne dass der normale Schweißablauf beeinflusst wird.

## Patentansprüche

1. Verfahren zum Verschweißen von elektrischen Leitern (32) wie Litzen mittels
- Ultraschall, insbesondere Litzen untereinander zur Herstellung von Durchgangs- und Endknoten (54, 58) oder Litzen mit einem Träger, wobei die Leiter in einen von zumindest zwei Begrenzungselementen begrenzten Verdichtungsraum (30) eingebracht und nach Schließen des Verdichtungsraums verschweißt werden, wobei über ein erstes Element wie eine Sonotrode (16) Ultraschall appliziert und über das erste Element oder ein zweites Element wie eine Gegenelektrode (18) die zu verschweißenden Leiter druckbeaufschlagt werden und wobei eine charakteristische Größe des Verdichtungsraums gemessen wird,
**dadurch gekennzeichnet,**
**dass** nach dem Verschweißen der Leiter (32) der Verdichtungsraum (30) druckentlastet und Ultraschall auf die verschweißten Leiter gegeben und anschließend die charakteristische Größe gemessen wird.

2. Verfahren nach Anspruch 1,
**dadurch gekennzeichnet,**
**dass** der Verdichtungsraum (30) von zumindest drei Elementen (16, 18, 20) begrenzt wird und nach dem Verschweißen zumindest ein zuvor festgelegtes wie verriegeltes Element (20) zu dem verschweißten Leiter (32) druckentlastet wie entriegelt wird.

3. Verfahren nach Anspruch 1,
**dadurch gekennzeichnet,**
**dass** als charakteristische Größe ein Geometriewert wie Höhe, Breite oder Diagonale des Verdichtungsraums (30), insbesondere Abstand zwischen dem ersten und zweiten Element (16, 18) gewählt wird.

4. Verfahren nach Anspruch 3,
**dadurch gekennzeichnet,**
**dass** der Geometriewert durch einen Weggeber (38) gemessen wird.

5. Verfahren zur Qualitätsüberprüfung der in dem Verdichtungsraum (30) der Ultraschallschweißvorrichtung (10) verschweißten Leiter (32) nach Anspruch 1,
**dadurch gekennzeichnet,**
**dass** die Leiter (32) in dem Verdichtungsraum (30) bei gleichzeitiger Querschnittsverringerung des Verdichtungsraums (30) kompaktiert und verschweißt werden, dass nach der Druckentlastung des Verdichtungsraums (30), wobei die verschweißten Leiter (32) zwischen dem ersten Element (16) und dem zweiten Element (18) verbleiben, und dem erneuten Applizieren von Ultraschall gleichzeitig eine Druckbeaufschlagung auf die verschweißten Leiter (32) über das erste und/oder das zweite Element (16, 18) erfolgt und dass anschließend die charakteristische Größe des Verdichtungsraums und/oder Geometrie der verschweißten Leiter (32) gemessen wird.

6. Verfahren nach Anspruch 1 oder 5,
**dadurch gekennzeichnet,**
**dass** die Leiter (32) über das zweite Element (18) druckbeaufschlagt werden.

7. Verfahren nach Anspruch 5,
**dadurch gekennzeichnet,**
**dass** in Abhängigkeit von der gemessenen charakteristischen Größe des Verdichtungsraums (30) und/oder der Geometrie der verschweißten Leiter (32) Güte der Verschweißung bewertet wird.

8. Verfahren nach Anspruch 5,
**dadurch gekennzeichnet,**
**dass** als charakteristische Größe des Verdichtungsraums (30) Höhe und/öder Breite und/oder Diagonale des Verdichtungsraums (30) zum Beispiel mittels eines Weggebers (38) gemessen wird.

9. Verfahren nach zumindest einem der Ansprüche 1 - 8,
**dadurch gekennzeichnet,**
**dass** das erneute Applizieren des Ultraschalls über eine Zeitdauer T mit 10 ms ≤ T ≤ 250 ms erfolgt.

10. Verfahren nach zumindest einem der Ansprüche 1 - 9,
**dadurch gekennzeichnet,**
**dass** das erneute Applizieren des Ultraschalls bei gleichzeitiger Druckbeaufschlagung auf die verschweißten Leiter (32) mit einem Druck P mit 1 bar ≤ P ≤ 4 bar erfolgt.

11. Verfahren nach zumindest einem der Ansprüche 1 - 10,
**dadurch gekennzeichnet,**
**dass** bei Feststellen qualitätsminderer Verschweißung auf die verschweißten Leiter (32) bei geöffnetem Verdichtungsraum (30) erneut Ultraschall bei gleichzeitiger Druckbeaufschlagung zum Zerstören oder weitgehendem Zerstören der Schweißung appliziert wird.

12. Verfahren nach zumindest einem der Ansprüche 1 - 10,
**dadurch gekennzeichnet,**
**dass** bei Feststellung einer ordnungsgemäßen Schweißung auf die verschweißten Leiter (32) bei druckentlastetem Verdichtungsraum (30) erneut Ultraschall bei gleichzeitiger Druckbeaufschlagung zum gezielten Nachverdichten der Verschweißung appliziert wird.

13. Verfahren zur Qualitätsüberprüfung von verschweißten Leitern, insbesondere verschweißten Litzen wie Durchgangs- oder Endknoten oder auf einem Träger verschweißten Litzen,
**dadurch gekennzeichnet,**
**dass** die verschweißten Leiter nach Druckentlastung zwischen einem Ultraschallschwingungen applizierenden ersten Element wie Sonotrode und einem zweiten Element wie Gegenelektrode angeordnet werden und dass über das erste Element Ultraschall appliziert und während oder nach dem Applizieren erfolgte Abstandsänderungen zwischen dem ersten und dem zweiten Element bei gleichzeitiger Druckbeaufschlagung der verschweißten Leiter gemessen wird.

## Claims

1. Method for welding electric conductors (32) such as litz wires using ultrasound, in particular litz wires among one another for producing transit or end nodes (54, 58) or litz wires with a carrier, whereby the conductors are introduced into a compression chamber (30) that is bounded by at least two boundary elements and are welded after the compression chamber is closed, whereby ultrasound is applied via a first element such as a sonotrode (16) and the conduits to be welded are acted upon by pressure via the first element or a second element, such as a counter electrode (18), and whereby a characteristic magnitude of the compression chamber is measured,
**characterized in**
**that** after the conductors (32) are welded, the compression chamber (30) is decompressed and ultrasound is supplied on the welded conductors, after which the characteristic magnitude is measured.

2. Method according to claim 1,
**characterized in**
**that** the compression chamber (30) is bounded by at least three elements (16, 18, 20), and after the welding, at least one previously fixed such as locked element (20) in relation to the welded conductor (32) is decompressed and unlatched.

3. Method according to claim 1,
**characterized in**
**that** a geometric value such as height, width or diagonal of the compression chamber (30) is selected as a characteristic magnitude, especially the spacing between the first and second element (16, 18).

4. Method according to claim 3,
**characterized in**
**that** the geometric value is measured by a displacement sensor (38).

5. Method for quality checking of the conductors (32) according to claim 1 that have been welded in the compression chamber (30) of the ultrasound welding device (10),
**characterized in**
**that** the conductors (32) are compacted and welded in the compression chamber (30) with simultaneous cross section reduction of the compression chamber (30),
**that** after decompressing the compression chamber (30), whereby the welded conductors (32) remain between the first element (16) and the second element (18), and after the renewed application of ultrasound the welded conductors (32) are subjected to pressure simultaneously via the first and/or the second element (16, 18), and that subsequently the characteristic magnitude of the compression chamber and/or geometry of the welded conductors (32) is measured.

6. Method according to claim 1 or 5,
**characterized in**
**that** the conductors (32) are subjected to pressure via the second element (18).

7. Method according to claim 5,
**characterized in**
**that** the quality of the welding is evaluated as a function of the measured characteristic magnitude of the compression chamber (30) and/or the geometry of the welded conductors (32).

8. Method according to claim 5,
**characterized in**
**that** height and/or width and/or diagonal of the compression chamber (30) are measured as characteristic magnitudes of the compression chamber (30), for example using a displacement sensor (38).

9. Method according to at least one of claims 1-8,
**characterized in**
**that** the renewed application of the ultrasound takes place over a duration T with 10 ms ≤ T ≤ 250 ms.

10. Method according to at least one of claims 1-9,
**characterized in**
**that** the renewed application of the ultrasound with simultaneous action by pressure on the welded conductors (32) takes place with a pressure P with 1 bar ≤ P ≤ 4 bar.

11. Method according to at least one of claims 1-10,
**characterized in**
**that**, when determining welds of lesser quality, ultrasound with simultaneous action of pressure is reapplied on the welded conductors (32) with the compression chamber (30) being open to destroy or largely destroy the weld.

12. Method according to at least one of claims 1-10,
**characterized in**
**that**, when determining a proper welding, ultrasound with simultaneous action of pressure is reapplied on the welded conductors (32) with the compression chamber (30) being decompressed for selective recompression of the weld.

13. Method for checking the quality of welded conductors, especially welded litz wires such as transit or end nodes or litz wires welded on a carrier,
**characterized in**
**that** after decompression the welded conductors are arranged between a first element that applies ultrasound vibrations, such as a sonotrode, and a second element, such as a counter electrode, and that ultrasound is applied via the first element, and changes in spacing between the first and second elements with simultaneous action of pressure on the welded conductors taking place during or after the application are measured.

## Revendications

1. Procédé pour souder des conducteurs électriques (32), tels que des fils toronnés, au moyen d'ultrasons, en particulier pour souder des fils toronnés entre eux pour fabriquer des noeuds de transit et d'extrémité (54, 58) ou des fils toronnés avec un support, sachant que les conducteurs sont introduits dans une chambre de compression (30) définie par au moins deux éléments de délimitation, puis soudés après fermeture de cette chambre de compression, sachant qu'un premier élément tel qu'une sonotrode (16) applique des ultrasons, que les conducteurs à souder sont comprimés par l'intermédiaire du premier élément ou d'un second élément tel qu'une contre-électrode (18), et qu'une taille caractéristique de la chambre de compression est mesurée,
**caractérisé en ce**
**qu'**après le soudage des conducteurs (32), la chambre de compression (30) est décomprimée, que des ultrasons sont appliqués sur les conducteurs soudés et que finalement la taille caractéristique est mesurée.

2. Procédé selon la revendication 1,
**caractérisé en ce**
**que** la chambre de compression (30) est limitée par au moins trois éléments (16, 18, 20) et qu'après le soudage, au moins un élément déterminé auparavant comme un élément verrouillé (20) est décomprimé par rapport au conducteur soudé (32) et comme déverrouillé.

3. Procédé selon la revendication 1,
**caractérisé en ce**
**qu'**une valeur géométrique telle que la hauteur, la largeur ou la diagonale de la chambre de compression (30), en particulier l'écart entre le premier et le second élément (16, 18) est choisie comme taille caractéristique.

4. Procédé selon la revendication 3,
**caractérisé en ce**
**que** la valeur géométrique est mesurée par un capteur de déplacement (38).

5. Procédé de contrôle de la qualité des conducteurs soudés (32) selon la revendication 1 dans la chambre de compression (30) du dispositif de soudage à ultrasons (10),
**caractérisé en ce**
**que** les conducteurs (32) sont compactés et soudés dans la chambre de compression (30) lors d'une réduction simultanée de section de la chambre de compression (30), qu'après la décompression de la chambre de compression (30), les conducteurs (32) soudés restant entre le premier élément (16) et le second élément (18), et la nouvelle application d'ultrasons est appliquée en même temps une pression sur les conducteurs soudés (32) par l'intermédiaire du premier et/ou second élément (16, 18), et que finalement, la taille caractéristique de la chambre de compression et/ou la géométrie des conducteurs soudés (32) est mesurée.

6. Procédé selon la revendication 1 ou 5,
**caractérisé en ce**
**que** les conducteurs (32) sont soumis à la pression par l'intermédiaire du second élément (18).

7. Procédé selon la revendication 5,
**caractérisé en ce**
**que** la qualité de la soudure est évaluée en fonction de la taille caractéristique mesurée de la chambre de compression (30) et/ou de la géométrie des conducteurs soudés (32).

8. Procédé selon la revendication 5,
**caractérisé en ce**
**qu'**est mesurée, par exemple à l'aide d'un capteur de déplacement (38), la hauteur et/ou la largeur et/ou la diagonale de la chambre de compression (30) comme taille caractéristique de la chambre de compression (30).

9. Procédé selon au moins l'une des revendications 1 à 8,
**caractérisé en ce**
**que** la nouvelle application d'ultrasons a lieu sur une durée T de 10 ms ≤ T ≤ 250 ms.

10. Procédé selon au moins l'une des revendications 1 à 9,
**caractérisé en ce**
**que** la nouvelle application d'ultrasons a lieu lors d'une compression simultanée des conducteurs soudés (32) à une pression de P de 1 bar ≤ P ≤ 4 bar.

11. Procédé selon au moins l'une des revendications 1 à 10,
**caractérisé en ce**
**que**, s'il est constaté que la soudure des conducteurs (32) est de mauvaise qualité lorsque la chambre de compression (30) est ouverte, des ultrasons sont à nouveau appliqués sous une compression simultanée pour détruire en partie ou entièrement la soudure.

12. Procédé selon au moins l'une des revendications 1 à 10,
**caractérisé en ce**
**que**, s'il est constaté que la soudure des conducteurs (32) dans la chambre de compression (30) non comprimée est conforme, des ultrasons sont à nouveau appliqués sous une compression simultanée pour recomprimer de manière ciblée la soudure.

13. Procédé de contrôle de la qualité de conducteurs soudés, en particulier de fils toronnés tels que des noeuds de transit ou d'extrémité ou de fils toronnés soudés sur un support,
**caractérisé en ce**
**que** les conducteurs soudés sont disposés après décompression entre un premier élément appliquant des vibrations ultrasonores, tel qu'une sonotrode, et un second élément, tel qu'une contre-électrode, que des ultrasons sont appliqués par l'intermédiaire du premier élément et que sont mesurées les modifications de distance obtenues pendant ou après l'application entre le premier et le second élément lors d'une compression simultanée des conducteurs soudés.
